# EUROPEAN PATENT SPECIFICATION

(11) **EP 2 749 582 B1**
(45) Date of publication and mention of the grant of the patent: **01.03.2017**
(21) Application number: 12841467.9
(22) Date of filing: 11.10.2012
(51) Int. Cl.: C08F 220/24, C08F 212/08, C09K 3/18

(54) **FLUORINE-CONTAINING COPOLYMER AND SURFACE MODIFYING AGENT CONTAINING SAME AS ACTIVE INGREDIENT**
FLUORHALTIGES COPOLYMER UND OBERFLÄCHENMODIFIKATOR DAMIT ALS WIRKSTOFF
COPOLYMÈRE CONTENANT DU FLUOR ET AGENT DE MODIFICATION DE SURFACE LE CONTENANT COMME INGRÉDIENT ACTIF

(30) Priority: 18.10.2011 JP 2011228825
(43) Date of publication of application: 02.07.2014
(73) Proprietor: Unimatec Co., Ltd., Tokyo 105-0012 (JP)
(72) Inventor: FUJITA Yuko, Kitaibaraki-shi Ibaraki 319-1544 (JP); KANEUMI Yoshiyama, Kitaibaraki-shi Ibaraki 319-1544 (JP)
(74) Representative: Beckmann, Claus
(86) International application number: PCT/JP2012/076264
(87) International publication number: WO 2013/058156

(56) References cited:
- EP-A1- 2 189 481
- WO-A1-2006/038493
- WO-A1-2010/101091
- WO-A1-2010/101091
- WO-A1-2012/036036
- JP-A- S62 577
- JP-A- H07 278 442

## Description

### TECHNICAL FIELD

The present invention relates to a fluorine-containing copolymer and a surface modifier comprising the same as an active ingredient. More particularly, the present invention relates to a fluorine-containing copolymer that is a copolymer of a (meth)acrylic acid derivative containing a perfluoroalkyl group having six or less carbon atoms, which is said to have low bioaccumulation potential; and a heat-resistant surface modifier comprising the fluorine-containing copolymer as an active ingredient.

### BACKGROUND ART

The present applicant has previously proposed a fluorine-containing polymer comprising, as a polymerization unit, 5 to 100 wt.% of a polyfluoroalkyl alcohol (meth)acrylic acid derivative represented by the general formula:

CₙF₂ₙ₊₁(CH₂CF₂)ₐ(CF₂CF₂)_{b}(CH₂CH₂)_{c}OCOCR=CH₂,

and a surface modifier comprising the fluorine-containing polymer as an active ingredient (Patent Document 1).

Patent Document 1 indicates that the polyfluoroalkyl alcohol (meth)acrylic acid derivative may be polymerized alone or copolymerized with another fluorine-containing polymerizable monomer and/or a fluorine atom-free polymerizable monomer; that usable fluorine-containing polymerizable monomers are polyfluoroalkyl group-containing (meth)acrylate monomers, etc., while usable fluorine atom-free polymerizable monomers are various (meth)acrylic acid esters, etc.; and that other copolymerizable monomers, such as various vinyl compounds, olefin compounds and diene compounds, can be copolymerized in the copolymer in a range that does not impair the characteristics of the copolymer (e.g., 30 wt.% or less in the copolymer).

In the Examples of Patent Document 1, benzyl methacrylate, benzyl acrylate, stearyl methacrylate, or stearyl acrylate is used as a fluorine atom-free polymerizable monomer singly or in combination with another copolymerizable monomer, such as 2-hydroxyethyl acrylate or polyalkylene glycol methacrylate.

The present applicant has also proposed a surface modifier prepared by dispersing a fluorine-containing polymer comprising, as a polymerization unit, 5 to 100 wt.% of a polyfluoroalkyl alcohol (meth)acrylic acid derivative represented by the above general formula in a non-fluorine-based organic solvent (Patent Document 2).

Patent Document 2 also indicates that, as for the fluorine-containing polymer used herein, a polyfluoroalkyl alcohol (meth)acrylic acid derivative can be copolymerized with a fluorine atom-free polymerizable monomer and/or another fluorine-containing polymerizable monomer; and that usable fluorine atom-free polymerizable monomers are various (meth)acrylic acid esters, preferably stearyl (meth)acrylate and benzyl (meth)acrylate in terms of the coating properties and the balance of the water- repellency and oil- repellency of a substrate to be processed. In addition, Patent Document 2 indicates that other copolymerizable monomers, such as various vinyl compounds, olefin compounds and diene compounds, can be copolymerized in the copolymer in a range that does not impair the characteristics of the copolymer.

Furthermore, in the Examples of Patent Document 2, stearyl methacrylate, stearyl acrylate, or benzyl methacrylate is used as a fluorine-free polymerizable monomer singly or in combination with another copolymerizable monomer, such as vinylidene chloride or N-butoxyacrylamide.

In Patent Documents 1 and 2, particularly in the Examples thereof, stearyl (meth)acrylate or benzyl (meth)acrylate is preferably used as a fluorine atom-free polymerizable monomer. The obtained fluorine-containing copolymer provides desired water-repellent evaluation/oil-repellent evaluation; however, surface modifiers, particularly water- and oil- repellent agents, comprising the fluorine-containing copolymer as an active ingredient are required to have further improved heat resistant.

### PRIOR ART DOCUMENT

### PATENT DOCUMENT

- Patent Document 1 :: WO 2009/034773
- Patent Document 2 :: WO 2010/101091

### OUTLINE OF THE INVENTION

### PROBLEM TO BE SOLVED BY THE INVENTION

An object of the present invention is to provide a fluorine-containing copolymer comprising a polyfluoroalkyl alcohol (meth)acrylic acid derivative as a copolymerization unit, the copolymer enabling a surface modifier using the copolymer as an active ingredient to have further improved heat resistance.

### MEANS FOR SOLVING THE PROBLEM

The above object of the present invention can be achieved by a fluorine-containing copolymer comprising a copolymer of a polyfluoroalkyl alcohol (meth)acrylic acid derivative represented by the general formula:

CₙF₂ₙ₊₁(CH₂CF₂)ₐ(CF₂CF₂)_{b}(CH₂CH₂)_{c}OCOCR=CH₂

wherein R is a hydrogen atom or a methyl group, n is an integer of 1 to 6, a is an integer of 1 to 4, b is an integer of 1 to 3, and c is an integer of 1 to 3, and styrene or a derivative thereof; and a surface modifier comprising the fluorine-containing copolymer as an active ingredient. The term "(meth)acrylic acid" as used herein refers to acrylic acid or methacrylic acid.

### EFFECT OF THE INVENTION

In Patent Documents 1 and 2, stearyl (meth)acrylate or benzyl (meth)acrylate, both of which are (meth)acrylic acid esters, is preferably used as a fluorine atom-free polymerizable monomer to be copolymerized with a polyfluoroalkyl alcohol (meth)acrylic acid derivative. In the Examples of Patent Documents 1 and 2, these (meth)acrylic acid esters are used singly or in combination with a fluorine atom-free polymerizable monomer other than the (meth)acrylic acid esters.

In the present invention, it was found that by selecting styrene or a derivative thereof, which is described in Patent Documents 1 and 2 as an example of fluorine atom-free polymerizable monomers other than (meth)acrylic acid esters but is not specifically used in their Examples, as a comonomer to be copolymerized with a polyfluoroalkyl alcohol (meth)acrylic acid derivative, the obtained fluorine-containing copolymer exhibits, when used as a surface modifier (e.g., a water- and oil- repellent agent), further excellent heat resistance.

### EMBODIMENTS FOR CARRYING OUT THE INVENTION

Examples of the polyfluoroalkyl alcohol (meth)acrylic acid derivative represented by the general formula:

CₙF₂ₙ₊₁(CH₂CF₂)ₐ(CF₂CF₂)_{b}(CH₂CH₂)_{c}OCOCR=CH₂

include the following compounds, as shown in Patent Documents 1 and 2, and their corresponding methacrylic acid derivatives:

| | |
|---|---|
| C₂F₅(CH₂CF₂)(CF₂CF₂)(CH₂CH₂)OCOCH=CH₂ | C₄F₉(CH₂CF₂)(CF₂CF₂)(CH₂CH₂)OCOCH=CH₂ |
| C₂F₅(CH₂CF₂)(CF₂CF₂)(CH₂CH₂)₂OCOCH=CH₂ | C₄F₉(CH₂CF₂)(CF₂CF₂)(CH₂CH₂)₂OCOCH=CH₂ |
| C₂F₅(CH₂CF₂)(CF₂CF₂)₂₂(CH₂CH₂)OCOCH=CH₂ | C₄F₉(CH₂CF₂)(CF₂CF₂)₂(CH₂CH₂)OCOCH=CH₂ |
| C₂F₅(CH₂CF₂)(CF₂CF₂)₂(CH₂CH₂)₂OCOCH=CH₂ | C₄F₉(CH₂CF₂)(CF₂CF₂)₂(CH₂CH₂)₂OCOCH=CH₂ |
| C₂F₅(CH₂CF₂)(CF₂CF₂)₃(CH₂CH₂)OCOCH=CH₂ | C₄F₉(CH₂CF₂)(CF₂CF₂)₃(CH₂CH₂)OCOCH=CH₂ |
| C₂F₅(CH₂CF₂)(CF₂CF₂)₃(CH₂CH₂)₂OCOCH=CH₂ | C₄F₉(CH₂CF₂)(CF₂CF₂)₃(CH₂CH₂)₂OCOCH=CH₂ |
| C₂F₅(CH₂CF₂)₂(CF₂CF₂)(CH₂CH₂)OCOCH=CH₂ | C₄F₉(CH₂CF₂)₂(CF₂CF₂)(CH₂CH₂)OCOCH=CH₂ |
| C₂F₅(CH₂CF₂)₂(CF₂CF₂)(CH₂CH₂)₂OCOCH=CH₂ | C₄F₉(CH₂CF₂)₂(CF₂CF₂)(CH₂CH₂)₂OCOCH=CH₂ |
| C₂F₅(CH₂CF₂)₂(CF₂CF₂)₂(CH₂CH₂)OCOCH=CH₂ | C₄F₉(CH₂CF₂)₂(CF₂CF₂)₂(CH₂CH₂)OCOCH=CH₂ |
| C₂F₅(CH₂CF₂)₂(CF₂CF₂)₂(CH₂CH₂)₂OCOCH=CH₂ | C₄F₉(CH₂CF₂)₂(CF₂CF₂)₂(CH₂CH₂)₂OCOCH=CH₂ |
| C₂F₅(CH₂CF₂)₂(CF₂CF₂)₃(CH₂CH₂)OCOCH=CH₂ | C₄F₉(CH₂CF₂)₂(CF₂CF₂)₃(CH₂CH₂)OCOCH=CH₂ |
| C₂F₅(CH₂CF_{z})₂(CF₂CF₂)₃(CH₂CH₂)₂OCOCH=CH₂ | C₄F₉(CH₂CF₂)₂(CF₂CF₂)₃(CH₂CH₂)₂OCOCH=CH₂ |

Examples of styrene or a derivative thereof to be reacted with such a polyfluoroalkyl alcohol (meth)acrylic acid derivative include styrene; and methyl group-, chlorine group-, fluorine group- or perfluoromethyl group-substituted styrenes, such as α-methylstyrene, β-methylstyrene, o-methylstyrene, p-methylstyrene, α-chlorostyrene, p-chlorostyrene, and fluorostyrene or perfluoromethylstyrene, corresponding thereto. Other examples are α-methoxystyrene, p-methoxystyrene, 4-vinylbenzoic acid, and the like.

The proportion of the polyfluoroalkyl alcohol (meth)acrylic acid derivative and styrene (derivative) in the copolymerization reaction is such that the former is 1 to 99 wt.%, preferably 30 to 95 wt.%, while the latter is 99 to 1 wt.%, preferably 70 to 5 wt.%. Consequently, a fluorine-containing copolymer having a weight average molecular weight (Mw) of 2,000 to 20,000,000, preferably 10,000 to 1,000,000, is formed.

Moreover, another fluorine-containing polymerizable monomer or a fluorine atom-free polymerizable monomer can also be copolymerized within a copolymerization ratio that does not impair the object of the present invention. Further, a polyfunctional monomer or oligomer can be copolymerized at 10 wt.% or less in the copolymer, if necessary. Examples of polyfunctional monomers or oligomers include ethyleneglycol di(meth)acrylate, propyleneglycol di(meth)acrylate, 1,4-butanediol di(meth)acrylate, 1,6-hexanediol di(meth)acrylate, 1,9-nonanediol di(meth)acrylate, neopentylglycol di(meth)acrylate, tetraethyleneglycol di(meth)acrylate, tripropyleneglycol di(meth)acrylate, polypropyleneglycol di(meth)acrylate, bisphenol A-ethylene oxide adduct diacrylate, dimethylol tricyclodecane diacrylate, glycerin methacrylate acrylate, 3-acryloyloxyglycerin monomethacrylate, and the like.

Furthermore, a crosslinkable group-containing monomer, such as (meth)acrylamide, N-methylol (meth)acrylamide, N-methoxymethyl acrylamide, N-butoxymethyl acrylamide, or glycidyl (meth)acrylate, may be added and copolymerized at about 10 wt.% or less, preferably about 0.5 to 7 wt.%, in the copolymer. When such a crosslinkable group-containing monomer is further copolymerized, the monomer is crosslinked with the hydroxyl group on the fiber surface or self-crosslinked, thereby enhancing the durability of the resulting water- and oil-repellent agent.

The copolymerization reaction of the polyfluoroalkyl alcohol (meth)acrylic acid derivative and styrene (derivative) may be performed by emulsion polymerization or suspension polymerization; however, solution polymerization is preferably used. Usable reaction solvents for solution polymerization are hydrocarbon solvents, alcohol solvents, ester solvents, ketone solvents, hydrofluorocarbon solvents, hydrofluoroether solvents, and the like. These solvents may be used singly or in combination of two or more.

Examples of hydrocarbon solvents include linear or branched aliphatic hydrocarbons having 5 to 16 carbon atoms; cycloaliphatic hydrocarbons, such as cyclopentane, cyclohexane and their methyl- or ethyl-substitutions; aromatic hydrocarbons, such as benzene, toluene and xylene; trifluoromethyl group-substituted aromatic hydrocarbons, such as 1,4-bis(trifluoromethyl)benzene and 1,3-bis(trifluoromethyl)benzene; and the like.

Examples of alcohol solvents include linear or branched alkanols having 1 to 8 carbon atoms. Usable alkanols are not only 1-alkanol, but also 2-alkanol, etc. Examples of ester solvents include methyl, ethyl, propyl and butyl ester of acetic acid; methyl propionate; methyl, ethyl and pentyl ester of lactic acid; and the like. Examples of ketone solvents include acetone, methyl ethyl ketone, methyl isobutyl ketone, 2-pentanone, 3-pentanone, 2-hexanone, and the like.

Examples of hydrofluorocarbon solvents are as follows:

| | | |
|---|---|---|
| CF₃CF₂CF₂CHF₂ | CF₃CF₂CF₂CH₂F | CF₃CF₂CH₂CF₃ |
| CHF₂CF₂CF₂CHF₂ | CHF₂CH₂CF₂CF₃ | CF₃CHFCH₂CF₃ |
| CF₃CH₂CF₂CHF₂ | CHF₂CHFCF₂CHF₂ | CF₃CHFCF₂CH₃ |
| CHF₂CHFCHFCHF₂ | CF₃CH₂CF₂CH₃ | CF₃CF₂CH₂CH₃ |
| CHF₂CH₂CF₂CH₃ | CHF₂CF₂CF₂CF₃ | CF₃CF₂CF₂CHFCF₃ |
| CHF₂CF₂CF₂CF₂CHF₂ | CF₃CHFCHFCF₂CF₃ | CF₃CHFCF₂CH₂CF₃ |
| CF₃CF(CF₃)CH₂CHF₂ | CF₃CF(CF₃)CH₂CF₃ | CF₃CH₂CF₂CH₂CF₃ |
| CHF₂CHFCF₂CHFCHF₂ | CfIF₂CF₂CF₂CHFCH₃ | CF₃CH₂CH₂CH₂CF₃ |
| CHF₂CH₂CF₂CH₂CHF₂ | CF₃(CF₂)₄CHF₂ | CF₃(CF₂)₄CH₂F |
| CHF₂(CF₂)₄CHF₂ | CF₃CF₂CF₂CF₂CH₂CF₃ | CF₃CH(CF₃)CHFCF₂CF₃ |
| CF₃CF₂CH₂CH(CF₃)CF₃ | CF₃CH₂CF₂CF₂CH₂CF₃ | CF₃CF₂CH₂CH₂CF₂CF₃ |
| CF₃CF₂CF₂CF₂CH₂CH₃ | CF₃CH(CF₃)CH₂CH₂CF₃ | CHF₂CF₂CH₂CH₂CF₂CHF₂ |
| CF₃CF₂CF₂CH₂CH₂CH₃ | | |

Moreover, examples of hydrofluoroether solvents are as follows:

| | | |
|---|---|---|
| CF₃CF₂CF₂OCH₃ | (CF₃)₂CFOCH₃ | CF₃CF₂CF₂OCH₂CH₃ |
| CF₃CF₂CF₂CF₂OCH₃ | (CF₃)₂CFCF₂OCH₃ | (CF₃)₃COCH₃ |
| CF₃CF₂CF₂CF₂CF₂OCH₂CH₃ | (CF₃)₂CFCF₂OCH₂CH₃ | (CF₃)₃COCH₂CH₃ |
| CF₃CF(OCH₃)CF(CH₃)₂ | CF₃CF(OCH₂CH₃)CF(CH₃)₂ | C₅F₁₁OCH₂CH₃ |
| CF₃CF₂CF₂CF(OCH₂CH₃)CF(CH₃)₂ | CH₃O(CF₂)₄OCH₃ | CH₃OCF₂CF₂OCH₂CH₃ |
| C₃H₇OCF(CF₃)CF₂OCH₃ | | |

Among these fluorine-containing solvents, at least one fluorine-containing organic solvent selected from 1,4-bis(trifluoromethyl)benzene, 1,1,1,2,2-pentafluoro-3,3-dichloropropane, 1,1,2,2,3-pentafluoro-1,3-dichloropropane, 1,1,1,2,3,4,4,5,5,5-decafluoropentane, perfluorohexane, etc., is preferably used in terms of the ease of handling.

As an initiator used at about 0.1 to 4 wt.%, preferably about 1 to 2 wt.%, based on the total amount of the comonomer, diacyl peroxide, peroxycarbonate, peroxyester, or the like, is used. Specific examples thereof include organic peroxides, such as isobutyryl peroxide, lauroyl peroxide, stearoyl peroxide, succinic acid peroxide, bis(heptafluorobutyryl) peroxide, pentafluorobutyroyl peroxide, bis(4-tert-butylcyclohexyl)peroxydicarbonate, di-n-propyl peroxydicarbonate, and diisopropyl peroxydicarbonate. Depending on the polymerization method, an azo compound, inorganic peroxide, or a redox system thereof can also be used. Depending on the reaction conditions and the composition ratio, the polymerization reaction may hardly progress; in that case, the polymerization initiator may be added again during the polymerization reaction.

Further, a chain transfer agent can be used, if necessary, to adjust the molecular weight. Examples of chain transfer agents include dimethyl ether, methyl t-butylether, C₁-C₆ alkanes, methanol, ethanol, 2-propanol, cyclohexane, carbon tetrachloride, chloroform, dichloromethane, methane, ethyl acetate, ethyl malonate, acetone, and the like.

The copolymerization reaction is performed using such a reaction solvent, a reaction initiator, etc., at a reaction temperature of about 0 to 100°C, preferably about 5 to 60°C, particularly preferably about 40 to 50°C. After completion of the reaction, a copolymer solution having a solid matters content of about 5 to 30 wt.% is obtained. The solvent is removed from this reaction mixture, thereby obtaining a fluorine-containing copolymer.

When the remaining unreacted comonomer was analyzed by gas chromatography, it was confirmed that the polyfluoroalkyl alcohol (meth)acrylic acid used in the copolymerization reaction was almost completely copolymerized.

The copolymer of the polyfluoroalkyl alcohol (meth)acrylic acid derivative can be produced by, not only solution polymerization, but also suspension polymerization or emulsion polymerization, which uses, for example, water as a dispersion medium and contains a nonionic surfactant and/or a cationic surfactant.

The copolymer of the polyfluoroalkyl alcohol (meth)acrylic acid derivative obtained in this manner can be separated from the reaction mixture by evaporation to dryness or coagulation by adding a flocculant, such as an inorganic salt, and purified by washing with a solvent, or the like. The weight average molecular weight (Mw) of the obtained copolymer, which is indicated by high-performance liquid chromatography, is about 2,000 to 20,000,000.

The polymer solution obtained by solution polymerization is further diluted with a fluorine-containing organic solvent, such as 1,4-bis(trifluoromethyl)benzene or 1,3-bis(trifluoromethyl)benzene, preferably the same organic solvent as the one used in the polymerization reaction, so that the solid matters content is about 0.01 to 30 wt.%, preferably about 0.05 to 5 wt.%, for use as a surface modifier. The polymer obtained by water-based emulsion polymerization, suspension polymerization, or the like can be used as it is. Alternatively, the polymer can be prepared as an aqueous dispersion by diluting the polymer with water to a solid matters content of about 0.1 to 10 wt.%; or as an aqueous dispersion or an organic solvent solution by adding a flocculant to the polymerization reaction solution to coagulate the polymer and dispersing in water or dissolving in a fluorine-containing organic solvent the copolymer separated by washing with water or an organic solvent. The aqueous dispersion preferably contains 20% or less of a surfactant and a water-soluble organic solvent. The aqueous dispersion or organic solvent solution can be used as a surface modifier, such as a water- and oil-repellent agent or an oil barrier.

The polymer solution comprising the aqueous dispersion or fluorine-containing organic solvent solution of the copolymer may further contain other additives that are required for use as a surface modifier. Examples of such additives include crosslinking agents, such as melamine resin, urea resin, and blocked isocyanate; polymer extenders; silicone resin or other water- repellants, such as oil and wax; insecticides, antistatic agents, dye stabilizers, anti-wrinkle agents, and stain blockers.

The surface modifier obtained in this manner can be effectively used as a water- and oil- repellent agent to be applied to metal, paper, film, fiber, cloth, fabric, carpet, or textile products made of filament, fiber, yarn, etc.; or an oil barrier, which prevents leakage of lubricating oil from the sliding surface to its surrounding area, for use in sliding parts of watches, motors, single-lens reflex camera lenses, and other precision instruments, or parts adjacent to such sliding parts. As the application method, coating, dipping, spraying, padding, roll coating, or a combination of these methods is generally used. For example, the surface modifier is used as a pad bath by adjusting the solid matters content of the bath to about 0.1 to 10 wt.%. A material to be processed is padded in this pad bath, and the excess solution is removed by squeeze rolls, followed by drying, so that about 0.01 to 10 wt.% of the polymer is attached to the material. Thereafter, drying is generally performed at a temperature of about 100 to 200°C for about 1 minute to about 2 hours, although it depends on the type of material to be processed. Thus, the water- and oil-repellent treatment is completed.

### EXAMPLES

The following describes the present invention with reference to Examples.

### Example 1

80 g of a fluorine-containing monomer A represented by the following formula:

CF₃(CF₂)₃(CH₂CF₂)(CF₂CF₂)(CH₂CH₂)OCOCH=CH₂

(99.2GC%) 20 g of styrene, and 350 g of 1,4-bis(trifluoromethyl)benzene [TFMB] were charged in a 500-ml reactor equipped with a condenser, and the air in the reactor was replaced with nitrogen gas for 30 minutes. Further, 1.0 g of bis(4-tert-butylcyclohexyl)peroxydicarbonate was added to the reactor (total amount: 451.0 g). Then, the temperature in the reactor was gradually raised to 50°C, and the polymerization reaction was performed at this temperature for 16 hours, while stirring with a magnetic stirrer.

After completion of the reaction, the reaction mixture was cooled, thereby obtaining a copolymer solution having a solid matters content of 21.5 wt.%. When the remaining unreacted comonomer was analyzed by gas chromatography, it was confirmed that 99% of the polyfluoroalkyl alcohol acrylic acid derivative used in the copolymerization reaction was copolymerized.

The obtained copolymer solution was placed in an oven at 120°C, and the solvent was removed to isolate a fluorine-containing copolymer, which had a weight average molecular weight (Mw) of 25,000. Here, Mw was measured by GPC measurement method using Shodex GPC KD 806M+KD-802+KD-G at a temperature of 40°C, and using a 10-mM hexafluoroisopropanol (containing 5 m mol CF₃COONa) solution as an eluate at a flow rate of 0.5 ml/min. A differential refractometer was used as the detector, and an SIC Labchart 180 (polymethyl methacrylate/dimethyl terephthalate molecular weight basis) was used for data analysis.

The copolymer solution was diluted with 1,4-bis(trifluoromethyl)benzene to a solid matters content of 2 wt.%. The diluted solution (1 ml) was applied to stainless steel plates (2 x 5 cm) and dried at 120°C for 30 minutes, thereby producing test pieces.

The produced surface modifier-applied test pieces were measured for the static contact angle, which served as one indicator of water- and oil-repellency, by Sessile drop technique at the beginning, after one month and after two months, at 100°C, 120°C and 150°C, using hexadecane C₁₆H₃₄ [HD] and water, respectively.

### Example 2

In Example 1, 90 g of a fluorine-containing monomer B represented by the following formula:

CF₃(CF₂)₃(CH₂CF₂)(CF₂CF₂)₂(CH₂CH₂)OCOCH=CH₂

(99.4GC%) was used in place of the fluorine-containing monomer A, and 10 g of p-methylstyrene was used in place of styrene, thereby obtaining a copolymer solution having a solid matters content of 21.2 wt.%. The Mw of the obtained fluorine-containing copolymer was 213,000.

### Example 3

In Example 1, 70 g of a fluorine-containing monomer C represented by the following formula:

CF₃(CF₂)₃(CH₂CF₂)(CF₂CF₂)₂(CH₂CH₂)OCOC(CH₃)=CH₂

(99.4GC%) was used in place of the fluorine-containing monomer A, and 30 g of p-chlorostyrene was used in place of styrene, thereby obtaining a copolymer solution having a solid matters content of 21.4 wt.%. The Mw of the obtained fluorine-containing copolymer was 185,000.

### Example 4

In Example 1, 40 g of a fluorine-containing monomer D represented by the following formula:

CF₃(CF₂)(CH₂CF₂)(CF₂CF₂)₂(CH₂CH₂)OCOCH=CH₂

(99.OGC%) was used in combination with 40 g of the fluorine-containing monomer A, 5 g of p-methylstyrene was used in combination with 15 g of styrene, and the same amount of 1,1,1,3,3-pentafluorobutane [HFC-365mfc] was used in place of TFMB as the reaction solvent, thereby obtaining a copolymer solution having a solid matters content of 21.6 wt.%. The Mw of the obtained fluorine-containing copolymer was 162,000.

### Comparative Example 1

In Example 1, the same amount of stearyl methacrylate [MA] was used in place of styrene, thereby obtaining a copolymer solution having a solid matters content of 21.0 wt.%. The Mw of the obtained fluorine-containing copolymer was 253,000.

### Comparative Example 2

In Example 1, the same amount of benzyl methacrylate [MA] was used in place of styrene, thereby obtaining a copolymer solution having a solid matters content of 21.1 wt.%. The Mw of the obtained fluorine-containing copolymer was 210,000.

The copolymer solutions obtained in Examples 2 to 4 and Comparative Examples 1 and 2 were also measured for the static contact angle in the same manner as in Example 1. Only in Example 4, HFC-365mfc, rather than TFMB, was used as the reaction solvent and the diluent solvent.

The following table shows the measurement results. The results demonstrate that no changes were observed in the static contact angles, which were used as an indicator of water- and oil-repellency, of the copolymer solutions using any of the fluorine-containing copolymers of the Examples as an active ingredient, even after one month and after two months at 100°C, 120°C and 150°C. This indicates that these copolymer solutions have sufficient heat resistance.

**Table**

| [Fluorine-containing copolymer] | | | | | | | | | | | | |
|---|---|---|---|---|---|---|---|---|---|---|---|---|
| | Ex. 1 | | Ex. 2 | | Ex. 3 | | Ex. 4 | | Comp. Ex. 1 | | Comp. Ex. 2 | |
| Fluorine-containing monomer A | 80 | | - | | - | | 40 | | 80 | | 80 | |
| Fluorine-containing monomer B | - | | 90 | | - | | - | | - | | - | |
| Fluorine-containing monomer C | - | | - | | 70 | | - | | - | | - | |
| Fluorine-containing monomer D | - | | - | | - | | 40 | | - | | - | |
| Styrene | 20 | | - | | - | | 15 | | - | | - | |
| Methylstyrene | - | | 10 | | - | | 5 | | - | | - | |
| Chlorostyrene | - | | - | | 30 | | - | | - | | - | |
| Stearyl MA | - | | - | | - | | - | | 20 | | - | |
| Benzyl MA | - | | - | | - | | - | | - | | 20 | |
| Reaction/diluent solvents | TFMB | | TFMB | | TFMB | | HFC | | TFMB | | TFMB | |
| Solid matters content (%) | 21.5 | | 21.2 | | 21.4 | | 21.6 | | 21.0 | | 21.1 | |
| Mw (x 10³) | 205 | | 213 | | 185 | | 162 | | 253 | | 210 | |
| | | | | | | | | | | | | |

| [Static contact angle] | | | | | | | | | | | | |
|---|---|---|---|---|---|---|---|---|---|---|---|---|
| | Ex. 1 | | Ex. 2 | | Ex. 3 | | Ex.4 | | Comp. Ex. 1 | | Comp. Ex. 2 | |
| | HD | Water | HD | Water | HD | Water | HD | Water | HD | Water | HD | Water |
| 100°C | | | | | | | | | | | | |
| Beginning | 77 | 119 | 75 | 119 | 74 | 117 | 76 | 118 | 76 | 120 | 76 | 121 |
| After 1 month | 77 | 119 | 75 | 119 | 74 | 117 | 76 | 118 | 74 | 118 | 74 | 116 |
| After 2 months 120°C | 76 | 119 | 75 | 119 | 74 | 117 | 75 | 118 | 73 | 116 | 70 | 114 |
| Beginning | 77 | 119 | 75 | 119 | 74 | 117 | 76 | 118 | 76 | 120 | 76 | 121 |
| After 1 month | 77 | 118 | 75 | 118 | 74 | 116 | 76 | 117 | 74 | 118 | 73 | 116 |
| After 2 months 150°C | 77 | 118 | 75 | 118 | 74 | 116 | 75 | 117 | 69 | 113 | 70 | 116 |
| Beginning | 77 | 119 | 75 | 119 | 74 | 117 | 76 | 118 | 76 | 120 | 76 | 120 |
| After 1 month | 77 | 118 | 75 | 118 | 73 | 116 | 76 | 117 | 74 | 115 | 74 | 116 |
| After 2 months | 76 | 118 | 74 | 118 | 73 | 116 | 75 | 117 | 24 | 75 | 38 | 91 |

## Claims

1. A fluorine-containing copolymer comprising a copolymer of a polyfluoroalkyl alcohol (meth)acrylic acid derivative represented by the general formula:
CₙF₂ₙ₊₁(CH₂CF₂)ₐ(CF₂CF₂)_{b}(CH₂CH₂)_{c}OCOCR=CH₂
wherein R is a hydrogen atom or a methyl group, n is an integer of 1 to 6, a is an integer of 1 to 4, b is an integer of 1 to 3, and c is an integer of 1 to 3, and styrene or a derivative thereof.

2. The fluorine-containing copolymer according to claim 1, which has a weight average molecular weight (Mw) of 2,000 to 20,000,000.

3. The fluorine-containing copolymer according to claim 1, wherein the styrene derivative is methyl group-, chlorine group-, fluorine group-, or perfluoromethyl group-substituted styrene.

4. Use of the fluorine-containing copolymer according to claim 1 as an active ingredient of a surface modifier.

5. A surface modifier comprising the fluorine-containing copolymer according to claim 1 as an active ingredient.

6. The surface modifier according to claim 5, which is prepared as an organic solvent solution.

7. The surface modifier according to claim 6, which is prepared as a fluorine-containing organic solvent solution.

8. The surface modifier according to claim 5, which is prepared as an aqueous dispersion.

9. Use of the surface modifier according to any one of claims 5, 6, 7 or 8 as a water- and oil- repellent agent.

## Patentansprüche

1. Fluorenthaltendes Copolymer, umfassend ein Copolymer aus einem Polyfluoralkylalkohol-(meth)acrylsäure-Derivat der allgemeinen Formel:
CₙF₂ₙ₊₁(CH₂CF₂)ₐ(CF₂CF₂)_{b}(CH₂CH₂)_{c}OCOCR=CH₂
worin R ein Wasserstoffatom oder eine Methylgruppe ist, n eine ganze Zahl von 1 bis 6 ist, a eine ganze Zahl von 1 bis 4 ist, b eine ganze Zahl von 1 bis 3 ist und c eine ganze Zahl von 1 bis 3 ist, und Styrol oder einem Derivat davon.

2. Fluorenthaltendes Copolymer nach Anspruch 1, das ein gewichtsmittleres Molekulargewicht (Mw) von 2.000 bis 20.000.000 hat.

3. Fluorenthaltendes Copolymer nach Anspruch 1, wobei das Styrolderivat Methylgruppen-, Chlorgruppen-, Fluorgruppen- oder Perfluormethylgruppen-substituiertes Styrol ist.

4. Verwendung des fluorenthaltenden Copolymers nach Anspruch 1 als aktiver Bestandteil eines Oberflächenmodifizierers.

5. Oberflächenmodifizierer, umfassend das fluorenthaltende Copolymer nach Anspruch 1 als aktiven Bestandteil.

6. Oberflächenmodifizierer nach Anspruch 5, der als eine Lösung in einem organischen Lösungsmittel hergestellt ist.

7. Oberflächenmodifizierer nach Anspruch 6, der als eine Lösung in einem fluorenthaltenden organischen Lösungsmittel hergestellt ist.

8. Oberflächenmodifizierer nach Anspruch 5, der als eine wässrige Dispersion hergestellt ist.

9. Verwendung des Oberflächenmodifizierers nach einem der Ansprüche 5, 6, 7 oder 8 als ein wasser- und ölabstoßendes Mittel.

## Revendications

1. Copolymère contenant du fluor comprenant un copolymère d'un dérivé d'acide (méth)acrylique d'alcool polyfluoroalkylique représenté par la formule générale :
CₙF₂ₙ₊₁(CH₂CF₂)ₐ(CF₂CF₂)_{b}(CH₂CH₂)_{c}OCOCR=CH₂
dans laquelle R représente un atome d'hydrogène ou un groupe méthyle, n représente un nombre entier de 1 à 6, a représente un nombre entier de 1 à 4, b représente un nombre entier de 1 à 3, et c représente un nombre entier de 1 à 3, et de styrène ou d'un dérivé de celui-ci.

2. Copolymère contenant du fluor selon la revendication 1, qui a un poids moléculaire moyen en poids (Mw) de 2 000 à 20 000 000.

3. Copolymère contenant du fluor selon la revendication 1, dans lequel le dérivé de styrène est un styrène substitué par un groupe méthyle, par un groupe chloré, par un groupe fluoré ou par un groupe perfluorométhyle.

4. Utilisation du copolymère contenant du fluor selon la revendication 1 en tant que principe actif d'un agent de modification de surface.

5. Agent de modification de surface comprenant le copolymère contenant du fluor selon la revendication 1 en tant que principe actif.

6. Agent de modification de surface selon la revendication 5, qui est préparé sous la forme d'une solution dans un solvant organique.

7. Agent de modification de surface selon la revendication 6, qui est préparé sous la forme d'une solution dans un solvant organique contenant du fluor.

8. Agent de modification de surface selon la revendication 5, qui est préparé sous la forme d'une dispersion aqueuse.

9. Utilisation de l'agent de modification de surface selon l'une quelconque des revendications 5, 6, 7 ou 8 en tant qu'agent hydrofuge et oléofuge.
